# EUROPEAN PATENT SPECIFICATION

(11) **EP 0 509 950 B1**
(45) Date of publication and mention of the grant of the patent: **16.12.1998**
(21) Application number: 92500023.4
(22) Date of filing: 13.03.1992
(51) Int. Cl.: A23N 1/00

(54) **A machine for the instantaneous preparation of fruit juices**
Maschine für die sofortige Bereitung von Obstsäften
Machine pour la préparation instantanée des jus de fruits

(30) Priority: 15.03.1991 ES 9100684
(43) Date of publication of application: 21.10.1992
(73) Proprietor: APROVISIONAMIENTO DE ZUMOS NATURALES, S.R.L., 08902 Hospitalet de Llobregat (Barcelona) (ES)
(72) Inventor: Figueiras, Angel, E-08014 Barcelona (ES)
(74) Representative: Kador & Partner

(56) References cited:
- GB-A- 1 041 675
- US-A- 2 975 810
- US-A- 3 060 984
- US-A- 3 450 248

## Description

This invention refers to a machine designed for the instant preparation of fruit juices, especially orange juice and similar fruit juices.

As known, the consumers of fruit juices appreciate their instant preparation, which means, made at the very moment of consumption. For this reason, many different types of machines have been projected to realize fruit juices in a very fast way and with a very simple system, of which the mechanism is merely automatic, based on coins or on a button.

Many of the machines known up to now, even if they allow to obtain fruit juices with an acceptable speed, present in many cases important inconveniences because of their mechanical complication, the dirtying of their elements, and so on.

US-A-2,975,810 discloses a citrus fruit juicer comprising a frame, a fixed blade mounted on said frame, said blade having an elongated cutting edge, reamers mounted for rotation on said frame, pushing means on either side of the said blade having a first portion thereon operable to push on the fruit above the cutting edge to move the same downwardly to be divided into halves by said blade edge, and having a second portion thereon engageable with said halves to move said halves toward the reamers, means on either side of said blade in the path of movement of the fruit halves while being moved by said above mentioned means to turn the same from positions on each side of the blade and with the opposite cut faces of the halves facing the blade to positions with said cut faces facing in the same direction.

US-A-3,060,984 discloses a juice machine, adapted for table-top use by consumers who themselves feed to it the fruit to be squeezed, comprising a feed bin with a sloping bottom, and a system of cups which raise the fruit to a chute leading to a cutting knife. The cutting mechanism includes fingers and a bow spring to stabilize the fruit, and a pair of swinging arms push both halves of the fruit against the squeezing heads.

The machine which this patent deals with presents original construction characteristics and allows to realize the complete cycle of preparing an orange juice or other juices, starting from some means of storage of the pieces of fruit, transport systems for this fruit to a feeding system with a cutting system, means for the guidance of the two half oranges towards the squeezing unit.

The machine which is the subject of this patent has as its main characteristics its great mechanical solidity, which allows to obtain a high functional viability and its fast functioning, which allows to obtain a very high production of juices.

The invention provides a machine for the instant preparation of fruit juices, of the type that includes a driving motor (40), a series of storage tracks (2) for pieces of fruit (4), and a guidance system for the transport of these to a central cutting and squeezing unit in which is mounted a fixed blade (18) onto which the pieces of fruit are pushed downwardly, said central cutting and squeezing unit comprising a system of double squeeze caps in opposition (30,31), both caps being driven turning round the same axis (47), that takes its movement from a main driving axis (44) that propels systems of rods (21,22) for the up and downward cutting movement of a block assembly (19,20) which pushes the pieces of fruit (27), and several receiving pans (32) for half pieces of fruit after the cutting and before the squeezing, the pieces of fruit reaching said central unit through an alimentation track (15) that receives them through an elevating system (5) that operates in a front part of the fruit storage mechanism, which track is disposed to receive the spillage of the collected pieces when these reach their maximum height, the central cutting and squeezing unit further comprising the fixed blade (18) and pusher (19) that is driven by a double system of rods (21,22), each one of which is connected to a crankshaft (24) and intermediate rods, each crankshaft (24) being driven by a helicoidal wheel (34) propelled by one or other threaded extremity (45) of the main driving axis (44), these threaded axes being inverted and this main axis being driven, through a system of pulleys (41,42) and belts (43), by the driving motor (40), with the block (20), pusher (19), fruit piece (27) and blade (18) being aligned along the axis of the up and downward movement.

Essentially, the machine, object of this patent, ,in the following preferred embodiments, holds first of all a storing system of the pieces of fruit ready for the preparation of juices, which holds multiple inclined tracks mounted in a frame in the form of a rather parallellopipedic cage. These tracks finish in a front part foreseen with a great deal of retention hooks and allowing an elevating system to move up and downward, able to elevate the oranges from any of the channels towards the higher part, where the unloading of the taken oranges happens towards a reserve and guidance line from which they move to the cutting and squeezing system.

A possible variation of the elevating system has a unique vertical post in which some tilting transporting plates can move to the upper part, where a tilting system causes the fall of the oranges on the track.

In the guidance and intermediate storage track for oranges or other pieces of fruit, some transversal marks are placed whose actioning is combined with the squeezing system of the piece of fruit at the moment of cutting, so that for every cycle of squeezing only one piece of fruit at a time is allowed to pass to the cutting line.

The squeezing system holds two elements in the shape of caps with undulations, and similar, and foreseen of rotatory movement to produce the juice of half an orange combined with a little pan that receives the half orange through the convex outer part of itself, presenting it towards the rotatory squeezing caps and accompanying the rest of the orange after the squeezing towards the lower part of the machine.

The machine has means to receive the juice that has been squeezed, which passes through a filtering grill to a tub that disposes of a float to control the level, and that starts or switches off the machine, allowing to have a certain reserve of freshly squeezed fruit juice for expenditure at any time.

For the extraction of the juice from the lower deposit, the machine has an electropump connected on one side with the exit of this deposit and on the other side with an exit tap. The disposition of the electropump allows to regulate the extraction of the juice from the deposit and the realization of a greater homogeneity in the juice, which reverberates on a better taste of the juice.

For a better understanding there are enclosed, as non limitative examples, some explanative drawings of a machine realized in accordance to this patent.

Figure 1 is a front view of the fruit storage system, on which we can see the elevating mechanism.

Figure 2 is a front view of the very system of storage, where we can see three different positions of the elevating system.

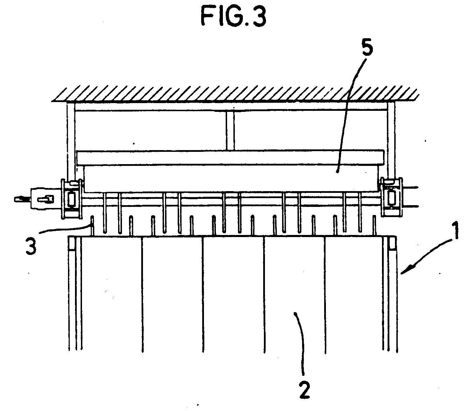

Figure 3 shows a ground figure corresponding to the former designs.

Figure 4 is a front view of the cutting and squeezing system.

Figure 5 shows an elevated lateral sideview corresponding to figure 4.

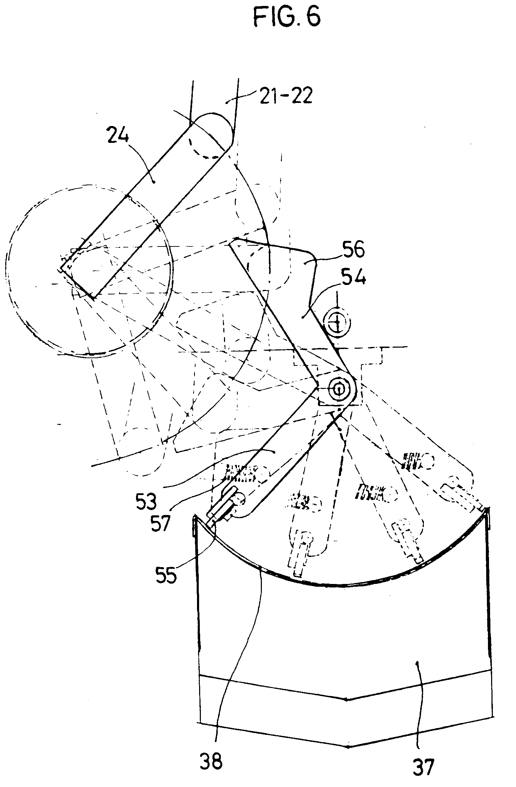

Figure 6 shows schematically a cleaning system for the sieve that receives the juice.

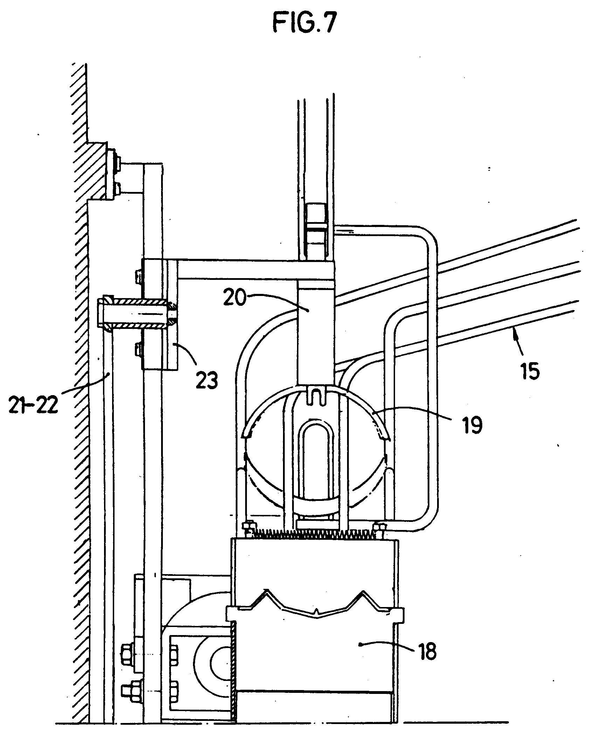

Figure 7 shows an elevated sideview of the cutting knife.

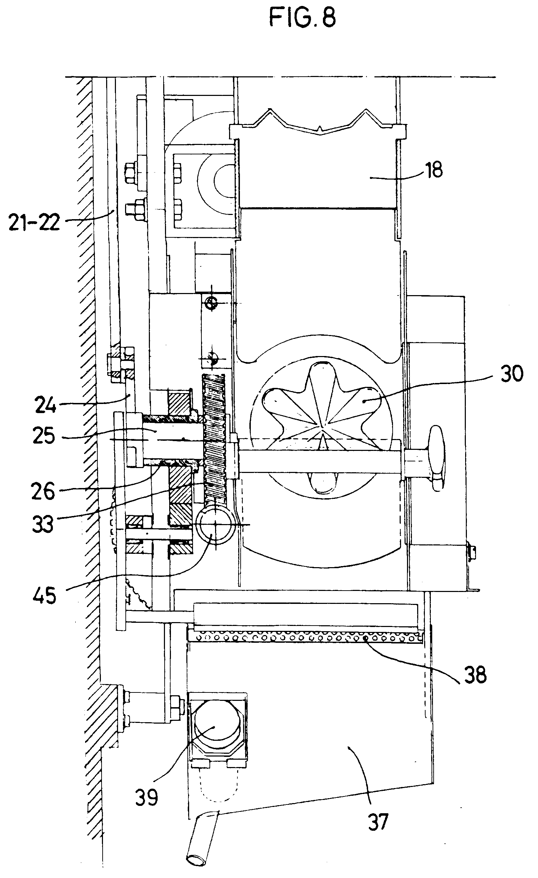

Figure 8 shows an elevated sideview of the cutting and squeezing system.

Figures 9 and 10 are different elevated sideviews and front views of a variant realization with a unique post for the ascending and descending of the basculating supports of the oranges.

Figure 11 is a ground view corresponding to the proper system of only one post.

As it is shown on the figures, the machine, object of this patent, shows a storage system for the pieces of fruit that is mentioned with the general number -1-, on which we can see the disposition of many inclined ramps -2- that, in their front part, have some retention hook systems -3- for the pieces of fruit -4-. The disposal -1-is filled up at the back, having a great capacity of storage, so that the machine can operate with its own fruit reserves during several hours or even a complete day.

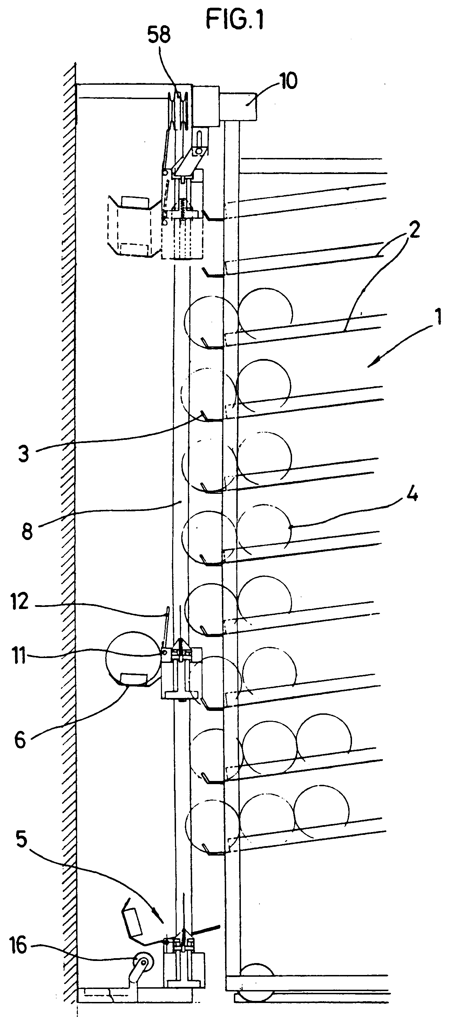

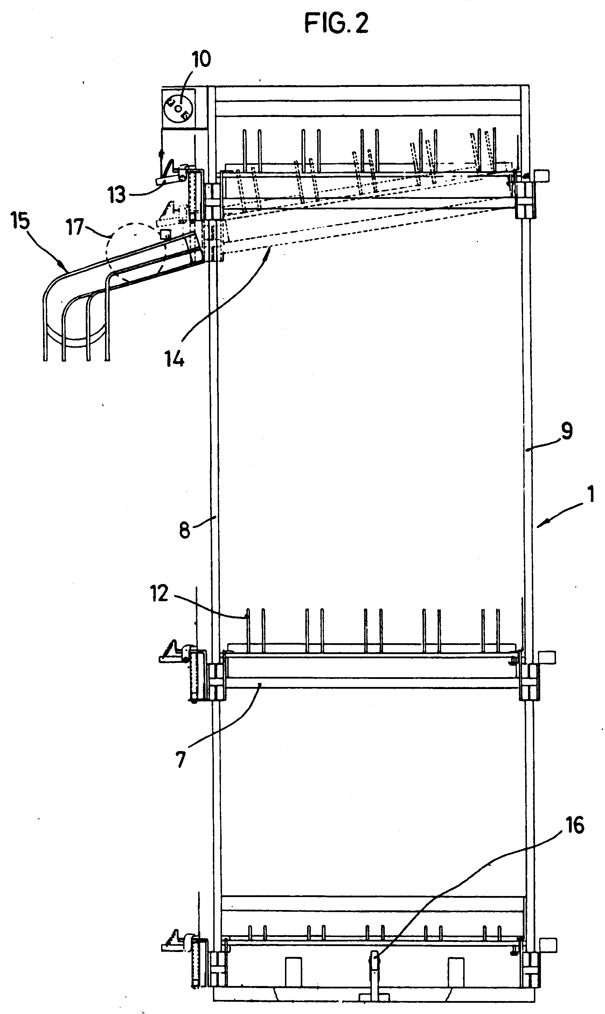

For the withdrawal of the pieces of fruit from the storage mechanism -1- the machine has an elevating system -5- which can be seen on figure 2. This elevating mechanism presents a crosspiece -7- that can be moved along the vertical guides -8- and -9- being driven by a tackle block system -58- and the corresponding cables by a separate motor -10-. The elevator presents a central tilting tray -6- which is rotatory round an axis -11- and presents a series of fingers -12- grouped in pairs, as we can see on figure 2, which are able to take the pieces of fruit out of the inclined tracks where they are at first, and owing to the inclined position of the tray -6- and the fingers -12- the oranges will be deposited in the tray -6-, obliging this to tilt, as it is shown on figure 1, at this moment the elevator will be able to climb to the higher part of the storage mechanism without any interferences with other lines of oranges ready to be taken for use. When the elevator reaches the higher part of the storage mechanism -1- the actioning motor stops automatically through the action of end-of-the-road-buffers and besides, a clamp is unfastened -13- so that the tray and crosspiece can tilt, as it is shown in the dotted position -14- on figure 2, allowing the fruit to slide to a track -15- that will lead the pieces of fruit to the cutting and squeezing unit.

A microinterruptor of end-of-the-road -16- situated in the inferior part of the storage unit, produces the automatic stop of the elevator when it comes to its lowest position.

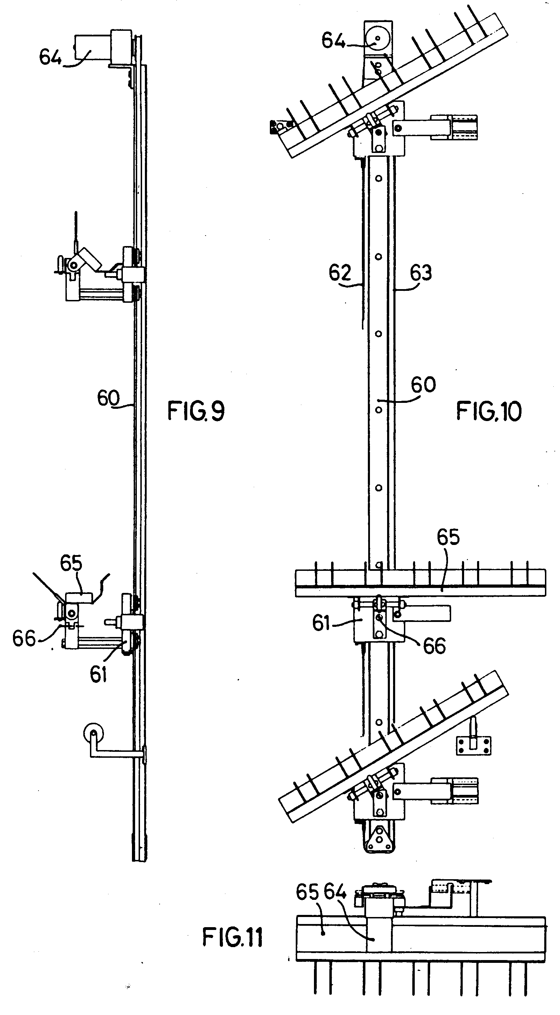

A preferable version of the lifting framework of the layers is the one presented on the figures 9, 10, and 11, in which one only vertical post -60- is run by a wagon -61- whose going up and down is controlled by a branch line cable -62- and -63- driven by an electromotor -64-. The layers -65- are tilting on an articulation axis -66- of the wagon -61-, where there is a system of fixed or mobile buffers to provoke the tilting of the trays.

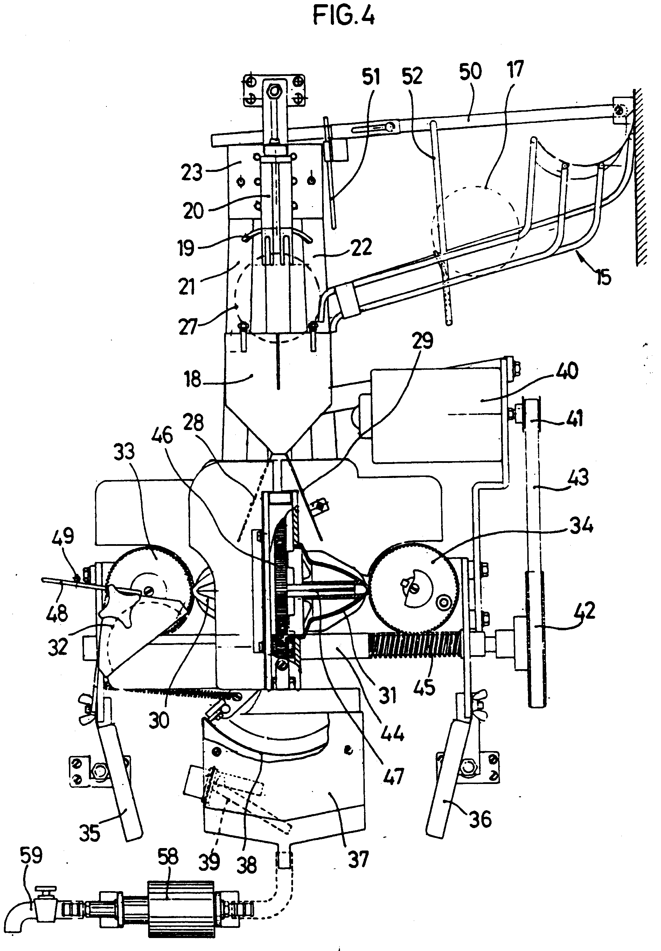

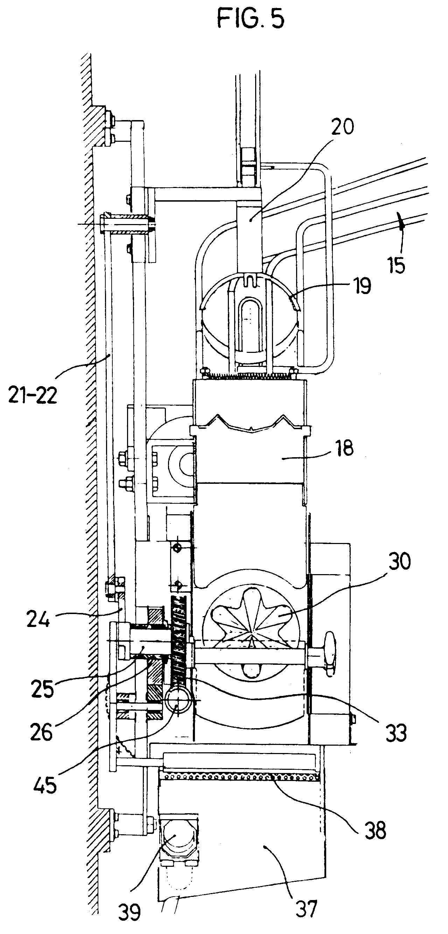

The toboggan -15- is formed by a series of bars who allow to realize the track of the pieces of fruit -17-figure 4, towards the cutting and squeezing unit, which first of all shows a stationary flat blade -18- and an arch-form squeezer -19- which is jointly shared by a vertical wagon -20- moved by the lateral connecting rods -21- and -22- that connect by their superior extremity to a transversal plate -23- and that connect by their bottom part to each crankshaft as -24-, represented on figure 5, rotatory to a horizontal axis -25- on an even cushion -26-and receiving the driving of the motoring organs of the machine, as we will explain further on.

The up and down movement of the wagon -20- is transmitted in the compression action of the treader -19-on an orange or other similar fruit -27- which is pressed against the blade -18- to be cut in two halves that are guided through each lateral baffle -28- and -29- to the two squeezing caps -30- and -31-.

To receive and present the half oranges, cut on the blade -18- to the squeezing caps -30- and -31-, the machine foresees the disposition of several pans, such as -32- one on each side of the machine, in correspondence with the respective cap, whose pans have a turning movement on pivots fixed to the helicoidal wheels -33- and -34-, receiving the cut piece of fruit and presenting it against the correspondent squeeze cap in the turning movement of the wheels -33- and -34-, which is translated into the total squeezing of the piece of fruit.

Once squeezed, the rest of the orange is conducted through the inferior baffle plates -35- and -36- to a lower collection place, to allow its easy elimination.

The juice obtained in the squeezing operation is collected in a lower deposit -37-, through a superior grille or sieve -38-. This deposit has a constant level control system -39- that provokes the starting or stopping of the machine according to the level of liquid established in the deposit -37-.

For the extraction of the juice from the inferior deposit -37- the machine disposes of an electropump -58-on one side connected with the exit of this deposit and on the other side with an exit tap -59-. The place of the electropump allows to regulate the extraction of the juice from the deposit and to realize a better homogeneity of this juice, which reverberates in a better taste of the juice.

The driving system of the machine has a main motor -40- which through pulleys -41- and -42- and the belt -43- produces the impulse of a central axis -44- gifted with two extreme sectors threaded in the inverse direction, of which only one is shown on the figure, mentioned under number -45-. From the middle part of the axis -44- and through the correspondent teeth, the toothwheel is propelled -46- which carries in its axis -47-the squeezing caps -30- and -31-.

The reversely threaded sectors of the axis -44-drive the different helicoidal wheels -33- and -34-, as can be seen on figure 4 for the threading -45-. These wheels -33- and -34- will therefore turn in opposite directions, carrying the little pans coupled to collect the pieces of cut fruit, one of which is presented with number -32- and driving by its own axis one of the two driving connecting rods of the cutting and squeezing bolster of the machine, as explained formerly.

The conduction pans of the cut orange halves, like the little pan -32- on figure 4, are foreseen of appendages -48- designed to interfere with a transversal bar -49- to produce its turning overcoming a spring, and presentation to the lowering piece of fruit.

The mobile bolster of the machine moves jointly a crossbar or superior structure -50- of which the frames are prolonged inferiorly -51- and -52-, the first of which is much shorter than the second, so that at every complete up and down cycle, a piece of fruit -17- is liberated by the frame -52- and is held by the frame -51-, being thereafter liberated by the latter to be passed to the cutting zone of the machine.

The cleaning of the filtering grill -38- is done with a bent arm with arms -53- and -54-, the first one of them carrying a changeable extreme plate -55- and the other one having an appendage -56- driven by the rod connected to the wheel -33-. A spring -57- produces the recuperation.

It can be appreciated that with the mechanism of the described organs, the machine disposes of the mediums to work in a complete cycle, realizing the storage, extraction, alimentation, sectioning, and squeezing functions, totally automatically and very fast.

## Claims

1. Machine for the instant preparation of fruit juices, of the type that includes a driving motor (40), a series of storage tracks (2) for pieces of fruit (4), and a guidance system for the transport of these to a central cutting and squeezing unit in which is mounted a fixed blade (18) onto which the pieces of fruit are pushed downwardly, said central cutting and squeezing unit comprising a system of double squeeze caps in opposition (30,31), both caps being driven turning round the same axis (47), that takes its movement from a main driving axis (44) that propels systems of rods (21,22) for the up and downward cutting movement of a block assembly (19,20) which pushes the pieces of fruit (27), and several receiving pans (32) for half pieces of fruit after the cutting and before the squeezing, the pieces of fruit reaching said central unit through an alimentation track (15) that receives them through an elevating system (5) that operates in a front part of the fruit storage mechanism, which track is disposed to receive the spillage of the collected pieces when these reach their maximum height, the central cutting and squeezing unit further comprising the fixed blade (18) and pusher (19) that is driven by a double system of rods (21,22), each one of which is connected to a crankshaft (24) and intermediate rods, each crankshaft (24) being driven by a helicoidal wheel (34) propelled by one or other threaded extremity (45) of the main driving axis (44), these threaded axes being inverted and this main axis being driven, through a system of pulleys (41,42) and belts (43), by the driving motor (40), with the block (20), pusher (19), fruit piece (27) and blade (18) being aligned along the axis of the up and downward movement.

2. Machine for the instant preparation of fruit juices, according to claim 1, characterized by the disposition of several little pans (32), articulated on jointly shared eccentric axes of the helicoidal wheels (33), (34), carrying appendages able to establish contact with fixed buffers (49) of the machine to produce their tilting, these little pans (32) being able to receive the cut fruit halves for their presentation and squeezing against the squeeze (30), (31) caps.

3. Machine for the instant preparation of fruit juices, according to claim nr 1, characterized by the disposition of a bent arm (53), (54) whose extremity (55) runs over the arch-form sieve (38) that receives the juice, and very close to it, cleaning the pulp that is expelled to the outside of the sieve (38) and this bent arm (53), (54) receiving its direct propelling with one of the propelling crankshafts (24) of one of the rod systems.(21), (22).

4. Machine for the instant preparation of fruit juices, according to claim nr 1, characterized by the disposition of a crossbar (50) fixed to the block assembly, from which crossbar (50) two frames (51), (52) prolonge themselves below, able to introduce the pieces of fruit (17) transversally in the entrance track towards the cutting unit, allowing the gradual advance of the fruit, piece by piece, towards the cutting blades (18).

5. Machine for the instant preparation of fruit juices, according to claim 1, characterized in that the mechanism for storing the pieces of fruit disposes of several lines of arched tracks (2), transversally placed in slightly inclined planes towards the zone of exit and foreseen of extreme hooks (3) that realize the retention of the pieces of, fruit (4) and that allow the passing of an elevator (5) that moves up and down through the front part of the storage mechanism of the fruit.

6. Machine for the instant preparation of fruit juices, according to claim 5, characterized in that the elevating system (5) has a crossbar (5) sliding on vertical tracks (8, 9) situated on the front side of the mechanism of storing, this crossbar bearing a tray (6) that extends to its whole length and that is capable of receiving the pieces of fruit that the hooks of the elevator extract from the track channels (12) when the elevator reaches its highest point, towards the cutting and squeezing unit.

7. Machine for the instant preparation of fruit juices, according to claim nr 6, characterized in that the transversal tray (6) that is a part of the elevating system (5) is constructed to tilt on one side, while on the other side it is held horizontal by a bolt that can be opened automatically when the elevator reaches its highest point, when the pieces are transferred through gravity to allow their passing to the cutting and squeezing mechanism.

8. Machine for the instant preparation of fruit juices, according to claim nr 7, characterized in that the tray (6) of the elevator is by itself tilting along a longitudinal axis (11), parallel to the axis of the tray itself, which has a plurality of extracting pairs of benches (12) that coincide in the middle of each of the exit tracks of the pieces of fruit, allowing their extraction and being able to tilt this tray by way of the collected pieces of fruit, so that the correspondent extracting benches remain in a real vertical position and thus out of service.

9. Machine for the instant preparation of fruit juices, according to claim nr 1, characterized in that the elevating mechanism (5) of the pieces of fruit is made of a unique vertical post (60) run vertically by a wagon (61) bearing the tilting transport bench (65), which is turning round a horizontal axis (66) of the wagon (61) in combination with a system of fixed and mobile buffers.

10. Machine for the instant preparation of fruit juices, according to claim 9, characterized in that the fruit elevator, has a system of motorized cable (62), (63) of two strands for the propelling of the trays (65).

11. Machine for the instant preparation of fruit juices, according to claim 3, characterized in that under the arcuate sieve (38) receiving the juice, a storage container (37) is arranged which lower part is connected to an outlet conduction having an intermediate electric pump (58) for forcing the juice towards an end dispensing tap (59).

## Patentansprüche

1. Maschine für die Sofortzubereitung von Fruchtsäften, wobei die Maschine von dem Typ ist, der einen Antriebsmotor (40), eine Reihe von Aufbewahrungsbahnen (2) für Fruchtstücke (4) sowie ein Führungssystem zum Transport dieser Fruchtstücke an eine mittige Schneide- und Preßeinheit, in der eine feste Klinge (18) angebracht ist, auf die Fruchtstücke in Abwärtsrichtung geschoben werden, enthält, wobei die mittige Schneide- und Preßeinheit ein System aus einander gegenüberliegenden Doppelpreßkappen (30, 31), die beide so angetrieben werden, daß sie sich um dieselbe Welle (47) drehen, die durch eine Hauptantriebswelle (44) bewegt wird, die Stangensysteme (21, 22) für die Aufwärts- und Abwärts-Schneidbewegung einer Blockbaueinheit (19, 20) antreibt, welche die Fruchtstücke (27) schiebt, sowie mehrere Aufnahmeschalen (32) für halbe Fruchtstücke nach dem Schneiden und vor dem Pressen enthält, wobei die Fruchtstücke die mittige Einheit über eine Beschickungsbahn (15) erreichen, die die Fruchtstücke über ein Hebesystem (5) empfängt, das im vorderen Teil des Fruchtaufbewahrungsmechanismus arbeitet, wobei die Bahn so angeordnet ist, daß sie den Abfall der gesammelten Stücke aufnimmt, wenn diese ihre maximale Höhe erreichen, wobei die mittige Schneide- und Preßeinheit ferner die feste Klinge (18) und eine Schiebeeinrichtung (19) enthält, die durch ein Doppelstangensystem (21, 22) angetrieben wird, wovon jedes mit einer Kurbelwelle (24) und mit Zwischenstangen verbunden ist, wobei jede Kurbelwelle (24) durch ein schraubenartiges Rad (34) angetrieben wird, das seinerseits durch das eine oder das andere Gewindeende (45) der Hauptantriebswelle (44) angetrieben wird, wobei diese Gewindewellen invertiert werden und diese Hauptwelle über ein System aus Riemenscheiben (41, 42) und Riemen (43) durch den Antriebsmotor (40) angetrieben werden, wobei der Block (20), die Schiebeeinrichtung (19), das Fruchtstück (27) und die Klinge (18) auf die Achse der Aufwärts- und Abwärtsbewegung ausgerichtet sind.

2. Maschine für die Sofortzubereitung von Fruchtsäften nach Anspruch 1, gekennzeichnet durch die Anordnung mehrerer kleiner Schalen (32), die an gemeinsam genutzten exzentrischen Wellen der schraubenartigen Räder (33), (34) angelenkt sind und Ansätze tragen, die einen Kontakt mit festen Puffern (49) der Maschinen herstellen können, um ihre Neigung herzustellen, wobei diese kleinen Schalen (32) die geschnittenen Fruchthälften aufnehmen können, um sie für die Preßkappen (30, 31) bereitzustellen und durch diese zu pressen.

3. Maschine für die Sofortzubereitung von Fruchtsäften nach Anspruch 1, gekennzeichnet durch die Anordnung eines gebogenen Arms (53, 54), dessen Ende (55) über das den Fruchtsaft aufnehmende bogenförmige Sieb (38) sehr nahe bei diesem verläuft und das Fruchtfleisch, das aus dem Sieb (38) ausgestoßen wird, reinigt, wobei dieser gebogene Arm (53, 54) seine direkte Vorwärtsbewegung von einer der Antriebskurbelwellen (24) eines der Stangensysteme (21, 22) empfängt.

4. Maschine für die Sofortzubereitung von Fruchtsäften nach Anspruch 1, gekennzeichnet durch die Anordnung einer Querstange (50), die an der Blockbaueinheit befestigt ist, wobei sich von der Querstange (50) unterhalb zwei Rahmen (51, 52) erstrecken, die die Fruchtstücke (17) transversal in die Einlaßbahn zur Schneideeinheit einführen können und die allmähliche Vorwärtsbewegung der Frucht Stück ihr Stück zu den Schneideklingen (18) ermöglichen.

5. Maschine für die Sofortzubereitung von Fruchtsäften nach Anspruch 1, dadurch gekennzeichnet, daß der Mechanismus zum Aufbewahren der Fruchtstücke mehrere Linien gekrümmter Bahnen (2) enthält, die transversal in zur Austrittszone leicht geneigten Ebenen angeordnet sind, wobei Außenhaken (3) vorgesehen sind, die die Fruchtstücke (4) halten und den Durchgang einer Hebeeinrichtung (5) ermöglichen, der sich durch den vorderen Teil des Fruchtaufbewahrungsmechanismus aufwärts und abwärts bewegt.

6. Maschine für die Sofortzubereitung von Fruchtsäften nach Anspruch 5, dadurch gekennzeichnet, daß das Hebesystem (5) eine Querstange (5) enthält, die auf vertikalen Bahnen (8, 9) gleitet, die sich an der Vorderseite des Aufbewahrungsmechanismus befinden, wobei diese Querstange ein Tablett (6) trägt, das sich über ihre gesamte Länge erstreckt und die Fruchtstücke aufnehmen kann, die die Haken der Hebeeinrichtung aus den Bahnkanälen (12) entnehmen, wenn die Hebeeinrichtung in Richtung zur Schneide- und Preßeinheit ihren höchsten Punkt erreicht.

7. Maschine für die Sofortzubereitung von Fruchtsäften nach Anspruch 6, dadurch gekennzeichnet, daß das transversale Tablett (6), daß einen Teil des Hebesystems (5) bildet, so konstruiert ist, daß es auf einer Seite geneigt ist, während die andere Seite durch einen Bolzen, der automatisch geöffnet werden kann, wenn die Hebeeinrichtung ihren höchsten Punkt erreicht, horizontal gehalten wird, wenn die Stücke aufgrund der Schwerkraft transportiert werden, um ihren Durchgang zum Schneide- und Preßmechanismus zu ermöglichen.

8. Maschine für die Sofortzubereitung von Fruchtsäften nach Anspruch 7, dadurch gekennzeichnet, daß sich das Tablett (6) der Hebeeinrichtung längs einer longitudinalen Achse (11) parallel zur Achse des Tabletts von selbst neigt, wobei das Tablett mehrere Paare von Entnahmegestellen (12) besitzt, die in der Mitte jeder der Fruchtstück-Austrittsbahnen übereinstimmen und deren Entnahme ermöglichen und dieses Tablett mittels der gesammelten Fruchtstücke neigen können, so daß die entsprechenden Entnahmegestelle in einer tatsächlich vertikalen Stellung und somit in Ruhestellung verbleiben.

9. Maschine für die Sofortzubereitung von Fruchtsäften nach Anspruch 1, dadurch gekennzeichnet, daß der Hebemechanismus (5) für die Fruchtstücke aus einer einzigen vertikalen Stange (60) gebildet ist, längs derer in vertikaler Richtung ein Wagen (61) verläuft, der das geneigte Transportgestell (65) trägt, das sich um eine horizontale Achse (66) des Wagens (61) in Kombination mit einem System aus festen und beweglichen Puffern dreht.

10. Maschine für die Sofortzubereitung von Fruchtsäften nach Anspruch 9, dadurch gekennzeichnet, daß die Fruchthebeeinrichtung ein System aus durch einen Motor angetriebenen Seilen (62, 63) aus zwei Litzen für den Antrieb der Tabletts (65) besitzt.

11. Maschine für die Sofortzubereitung von Fruchtsäften nach Anspruch 3, dadurch gekennzeichnet, daß unter dem den Fruchtsaft aufnehmenden gekrümmten Sieb eine Aufbewahrungsbehälter (37) angeordnet ist, dessen unterer Teil mit einer Auslaßleitung verbunden ist, die eine Zwischen-Elektropumpe (58) besitzt, um den Fruchtsaft zu einer Endausgabe-Zapfstelle (59) zu fördern.

## Revendications

1. Machine pour la préparation instantanée de jus de fruit du type comprenant un moteur d' entraînement (40), une série de voies de stockage (2) pour les fruits (4), et un système de guidage pour l'acheminement de ceux-ci sur une unité centrale de coupe et de pressage dans laquelle est montée une lame fixe (18) sur laquelle les fruits sont amenés par poussée vers le bas, cette unité centrale de coupe et de pressage comprenant un système de double capuchon de pressage en opposition (30, 31), les deux capuchons étant entraînés en tournant autour du même axe (47) qui prélève son mouvement d'un axe d'entraînement principal (44) qui anime des systèmes de tiges (21, 22) pour le mouvement de coupe vers le haut et vers le bas d'un ensemble bloc (19, 20) qui pousse les fruits (27) et plusieurs récipients de réception (32) pour les moitiés de fruits après la coupe et avant la pressage, les fruits arrivant sur cette unité centrale par une voie d'alimentation (15) qui les reçoit par un système élévateur (5) qui fonctionne dans une partie frontale du mécanisme de stockage de fruits, laquelle voie peut recevoir le trop-plein des morceaux recueillis lorsque ceux-ci atteignent leur hauteur maximum, l'unité centrale de coupe et de pressage comprenant de plus la lame fixe (18) et le poussoir (19) qui est entraîné par un double système de tiges (21, 22) dont chacune est raccordée à un vilebrequin (24) et des tiges intermédiaires, chaque vilebrequin (24) étant entraîné par une roue hélicoïdale (34) animée par une ou l'autre extrémité filetée (45) de l'axe d'entraînement principal (44), ces axes filetés étant inversés et cet axe principal étant inversé par un système de poulies (41, 42) et des courroies (43), par le moteur d'entraînement (40) avec le bloc (20), le poussoir (19), le fruit (27) et la lame (18) étant alignés sur l'axe du mouvement de montée et de descente.

2. Marine pour la préparation instantanée de jus de fruit selon la revendication 1, caractérisée par la disposition de plusieurs petits récipients (32) articulés sur des axes excentriques partagés en commun des roues hélicoïdales (33, 34) portant des appendices aptes à établir le contact avec des tampons fixes (49) de la machine pour produire leur basculement, ces petits récipients (32) pouvant recevoir les moitiés de fruit coupé pour leur présentation et leur pressage contre les capuchons de pressage (30, 31).

3. Machine pour la préparation instantanée de jus de fruit selon la revendication 1, caractérisée par la disposition d'un bras courbe (53, 54) dont l'extrémité (55) passe au-dessus d'un tamis (38) arqué qui reçoit la jus, et très proche de celui-ci, nettoyage de la pulpe qui est expulsée vers l'extérieur du tamis (38) et ce bras courbe (53, 54) recevant son actionnement direct par l'un des vilebrequins d'animation (24) de l'un des systèmes de tiges (21, 22).

4. Machine pour la préparation instantanée de jus de fruit selon la revendication 2, caractérisée par la disposition d'une barre transversale (50) sur l'ensemble bloc, barre transversale (50) à partir de laquelle se prolongent deux châssis (51, 52) au-dessous permettant l'introduction des fruits (17) transversalement dans la voie d'entrée en direction de l'unité de coupe, permettant l'amenée progressive du fruit un par un en direction des lames de coupe (18).

5. Machine pour la préparation instantanée de jus de fruit selon la revendication 1, caractérisée en ce que le mécanisme pour stocker les fruits dispose de plusieurs lignes de voie arquée (2), placées transversalement dans des plans légèrement inclinés en direction de la zone de sortie et munies de crochets extre̊mes (3) qui permettent de retenir les fruits (4) et qui autorisent le passage d'un élévateur (5) qui se déplace vers le haut et vers le bas par la partie frontale du mécanisme de stockage de fruits.

6. Machine pour la préparation instantanée de jus de fruit selon la revendication 5, caractérisée en ce que le système d'élévation (5) comporte une barre transversale (5) coulissant sur dos voies verticales (8, 9) situées sur le côté avant du mécanisme de stockage, cette barre transversale supportant un plateau (6) que s'étend sur toute sa longueur et qui peut recevoir les fruits que les crochets de l'élévateur extraient des canaux (12) de voies lorsque l'élévateur atteint son point le plus haut en direction de l'unité de coupe et de pressage.

7. Machine pour la préparation instantanée de jus de fruit selon la revendication 6, caractérisée en ce que le plateau transversal (6) qui fait partie du système élévateur (5) est conçu pour basculer sur un côté tandis que sur l'autre côté, il est maintenu horizontalement par un boulon qui peut s'ouvrir automatiquement lorsque l'élévateur atteint son point le plus haut lorsque les fruits sont transférés par gravité pour permettre leur passage vers le mécanisme de coupe et de pressage.

8. Machine pour la préparation instantanée de jus de fruit selon la revendication 7, caractérisée en ce que le plateau (6) de l'élévateur est en lui-même basculant le long d'un axe longitudinal (11) parallèle à l'axe du plateau lui-même, avec une pluralité de paires d'extractions de support (12) qui coïncident au centre de chacune des voies de sortie des fruits permettant leur extraction et le basculement de ce plateau par les fruits recueillis de sorte que les supports d'extraction correspondants demeurent dans une position verticale réelle et sont ainsi hors fonctionnement.

9. Machine pour la préparation instantanée de jus de fruit selon la revendication 1, caractérisée en ce que le mécanisme élévateur (5) des fruits est réalisé par un montant vertical unique (60) actionné verticalement par un chariot (61) portant la support de transport basculant (65) qui tourne autour d'un axe horizontal (66) du chariot (61) en combinaison avec un système de tampon fixe et mobile.

10. Machine pour la préparation instantanée de jus de fruit selon la revendication 9, caractérisée en ce que l'élévateur de fruits comporte un système de câbles motorisés (62, 63) de deux brins pour l'animation des plateaux (65).

11. Machine pour la préparation instantanée de jus de fruit selon la revendication 3, caractérisée en ce que sous le tamis arqué (38) recevant le jus, il est disposé un réservoir de stockage (37) dont la partie inférieure est raccordée à une conduite de sortie avec une pompe électrique intermédiaire (58) pour forcer le jus en direction d'un robinet de distribution d'extrémité (59).
